Europäisches Patentamt

European Patent Office

Office européen des brevets

(11) Numéro de publication: **0 170 959**
A2

## (12) DEMANDE DE BREVET EUROPEEN

(21) Numéro de dépôt: 85109083.7

(22) Date de dépôt: 20.07.85

(51) Int. Cl.⁴: **G 11 B 3/64**

(30) Priorité: 07.08.84 BE 213459

(43) Date de publication de la demande: 12.02.86
Bulletin 86/7

(84) Etats contractants désignés: **DE FR GB IT**

(71) Demandeur: **Staar Development Company -S.A.,
479 Avenue Louise, B-1050 Bruxelles (BE)**

(72) Inventeur: **Staar, Marcel Jules Hélène, 479 Avenue
Louise, B-1050 Bruxelles (BE)**

(74) Mandataire: **Splanemann, Rainer et al, Patentanwälte R.
Splanemann Dr. B. Reitzner Tal 13,
D-8000 München 2 (DE)**

(54) **Système de reproduction de sillons d'enregistrements sonores sur films.**

(57) Système de reproduction de sillons d'enregistrements sonores sur films ou bandes, caractérisé en ce que des moyens sont prévus pour qu'un film mère portant en relief les sinuosités des sillons puisse être pressé ponctuellement contre un film vierge, des moyens étant prévus pour chauffer localement seulement la matière plastique devant recevoir l'empreinte du sillon mère.

STAAR DEVELOPMENT COMPANY S.A. - BRUXELLES - BELGIQUE.

SYSTEME DE REPRODUCTION DE SILLONS D'ENREGISTREMENTS
SONORES SUR FILMS.

Il est connu qu'on peut prévoir sur un film cinématographique ou sur des bandes de matière plastique, un ou plusieurs enregistrements sonores au moyen de pistes optiques, magnétiques ou au moyen de sillons mécaniques.

Chaque procédé a ses avantages et ses inconvénients en ce qui concerne les performances et le coût de fabrication en grande serie.

Les systèmes de sillons mécaniques présentent l'avantage de pouvoir être lus par un simple capteur à aiguille d'appareils de reproductions sonores peu couteux et relativement peu précis.

Par contre, de par la structure et la longueur d'un film ou d'une bande, les sillons doivent être gravés individuellements ce qui présente des limites de vitesse de fabrication très contraignantes, même sur des machines pouvant réaliser un certain nombre d'enregistrements simultanément.

I

Le but de la présente invention est de proposer des moyens pour pouvoir reproduire des sillons d'enregistrements sonores ou d'informations quelconques sur bandes ou films de matière plastique, à grandes vitesses.

Pour réaliser ce but, on propose de prévoir un film ou bande mère portant en relief les sinuosités des sillons et pouvant être juxtaposés à une bande vierge afin de se dérouler en synchronisme avec celle-ci et subir une pression ponctuelle continue d'un film contre l'autre, on propose essentiellement des moyens pour chauffer très localement la matière plastique du film devant recevoir l'empreinte en relief du sillon mère, une fraction de seconde avant la pression locale d'une bande contre l'autre.

De cette façon, le moulage de l'empreinte est très précis, et la bande mère ne se dégradant pas rapidement, permettra de nombreuses copies fidèles.

Seulement la matière strictement nécessaire au moulage étant ramolie, la structure, les dimensions et les qualités du film ne peuvent s'altérer.

Pour bien faire comprendre l'invention on donnera ci-après un exemple non limitatif.

La FIG. I représente un film cinématographique I sur lequel un sillon 2 porte des sinuosités mécaniques correspondant à des enregistrements sonores simples ou stéréoscopiques.

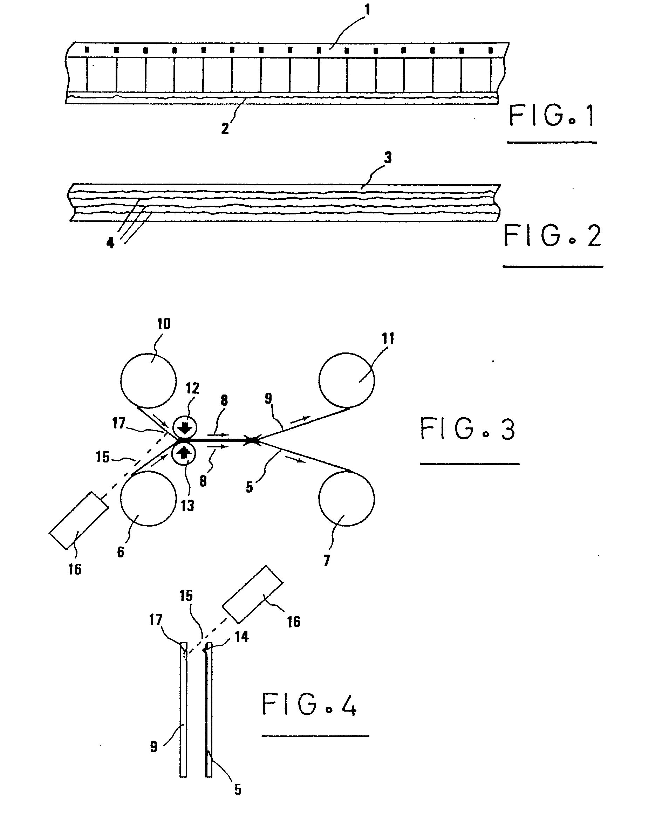

La FIG. 2 montre une bande de matière plastique 3 portant des sillons d'enregistrements 4 pouvant être lus simultanément ou individuellement.

Ces bandes sont entraînées à une vitesse constante, et les informations peuvent être lues par des systèmes classiques biens connus, comme par exemple une aiguille qui suit les sinuosités des sillons et transforment les déplacements en vibrations audibles d'une membrane ou par exemple par un capteur piézo-électrique pouvant transformer les pressions mécaniques de l'aiguille en courants électriques pouvant être amplifiés par des systèmes électroniques suivant les besoins de reproduction sonore.

Suivant l'invention on propose donc de réaliser une bande mère portant en relief les sinuosités correspondant aux creux d'un sillon gravé sur une bande originale.

La FIG. 3 montre une bande mère 5 se déroulant de la bobine 6 vers la bobine 7 dans le sens des flèches 8.

Une bande vierge 9 en matière plastique thermoformable ou enduite d'une matière thermoformable se déroule de la bobine IO vers la bobine II dans le sens des flèches 8.

Des rouleaux I2 et I3 entraînent les bandes, par un moteur non représenté, et les pressent en même temps l'une contre l'autre, afin que les reliefs I4 de la bande mère 5 puissent venir s'encastrer dans la bande vierge.

Les reliefs de la bande mère, très fins et très précis, sont forcément délicats et fragiles, et se dégraderaient rapidement par leur pression contre la bande vierge qui doit nécessairement présenter une grande solidité mécanique pour ne pas s'user rapidement lors des nombreuses reproduction des enregistrements.

Suivant l'invention on propose de chauffer très localement la matière plastique du film ou de la bande, très peu de temps avant la pression ponctuelle de la bande mère contre la bande vierge.

La matière plastique, ramolie seulement à l'endroit local requis, viendra épouser avec précision les reliefs de la bande mère sans risque de dégrader les caractéristiques du film, principalement celles de films cinématographiques.

La FIG. 4 montre une coupe d'une bande mère 5 portant des sinuosités en relief I4 pouvant être pressée contre une bande vierge 9.

Le rayon I5 d'un laser I6 peut venir frapper avec précision la partie I7 afin de ramolir seulement la matière correspondant sensiblement à la piste mère.

REVENDICATIONS

I - Système de reproduction de sillons d'enregistrements sonores sur films ou bandes, caractérisé en ce que des moyens sont prévus pour qu'un film ou bande mère portant en relief les sinuosités des sillons peuvent être juxtaposés à un film ou bande de matière plastique vierge afin de pouvoir se dérouler en synchronisme avec celle-ci et subir une pression ponctuelle continue d'un film contre l'autre, des moyens étant prévus pour chauffer localement seulement la matière plastique devant recevoir l'empreinte du sillon mère.

2 - Suivant la revendication I, caractérisé en ce que les moyens prévus pour chauffer localement seulement la matière plastique devant recevoir l'empreinte du sillon mère soient réalisés par un rayon laser venant frapper la bande vierge une fraction de seconde seulement avant la pres-

FIG.1

FIG.2

FIG.3

FIG.4